(19) Europäisches Patentamt / European Patent Office / Office européen des brevets

(11) **EP 3 652 426 B1**

(12) **FASCICULE DE BREVET EUROPEEN**

(45) Date de publication et mention
de la délivrance du brevet:
**03.11.2021 Bulletin 2021/44**

(21) Numéro de dépôt: **18735601.9**

(22) Date de dépôt: **10.07.2018**

(51) Int Cl.:
*F02D 41/00* (2006.01)  *F02M 26/06* (2016.01)
*F02M 26/10* (2016.01)  *F02B 37/22* (2006.01)
*F02B 37/12* (2006.01)

(86) Numéro de dépôt international:
**PCT/EP2018/068617**

(87) Numéro de publication internationale:
**WO 2019/011894 (17.01.2019 Gazette 2019/03)**

(54) **PROCÉDÉ DE COMMANDE D'UN MOTEUR À COMBUSTION INTERNE SURALIMENTÉ**

VERFAHREN ZUR STEUERUNG EINES AUFLADEVERBRENNUNGSMOTORS

METHOD FOR CONTROLLING A SUPERCHARGED INTERNAL COMBUSTION ENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.07.2017 FR 1756572**

(43) Date de publication de la demande:
**20.05.2020 Bulletin 2020/21**

(73) Titulaire: **Renault S.A.S.
92100 Boulogne-Billancourt (FR)**

(72) Inventeur: **LEFEBVRE, Alain
91630 Leudeville (FR)**

(56) Documents cités:
**EP-A1- 1 676 995      EP-A1- 2 516 836
EP-A1- 3 051 099      WO-A1-2016/156715
DE-A1-102012 209 230   DE-A1-102013 003 418
JP-A- 2010 090 806**

## Description

La présente invention concerne un procédé de commande d'un moteur à combustion interne suralimenté, ledit moteur comprenant des cylindres de combustion, un circuit d'admission débouchant dans un collecteur d'admission relié aux cylindres et comprenant un compresseur, et un circuit d'échappement débouchant en sortie d'un collecteur d'échappement relié aux cylindres et comprenant une turbine, couplée en rotation au compresseur.

L'une des limitations rencontrées classiquement dans les systèmes de suralimentation de moteurs à combustion interne par turbocompresseur concerne les performances disponibles à bas régime du fait de l'apparition d'instabilités au niveau du compresseur appelées pompage. En particulier, quand un moteur suralimenté fonctionne à pleine charge et bas régime (typiquement de 1000 à 2000 tr/min), le pompage du compresseur est le principal facteur limitant les performances du moteur. Ce phénomène est plus précisément lié aux instabilités de l'écoulement dans la roue de compresseur et dans le diffuseur du compresseur (encore nommées décollements aérodynamiques), qui ne permettant pas d'augmenter davantage le rapport de compression. Le débit de gaz d'admission au travers du compresseur devient instable, ce qui entraîne une instabilité du débit dans le moteur et du couple moteur.

Le pilotage du système de suralimentation du moteur par turbocompresseur à bas régime est donc limité par des conditions de fonctionnement du compresseur permettant un fonctionnement dans une zone où le phénomène de pompage est absent.

On connaît du document KR101240940, un système permettant d'améliorer les performances à faible vitesse d'un moteur suralimenté par turbocompresseur, en contrôlant la génération d'un mouvement tourbillonnaire hélicoïdal des gaz d'admission à l'entrée du compresseur dans le circuit d'admission, ce qui a pour effet de repousser les décollements aérodynamiques à l'intérieur de la roue de compresseur et de repousser le pompage du compresseur. Pour ce faire, un ensemble de lames orientables est positionné dans un canal d'admission conduisant à l'entrée du compresseur, et un actionneur de commande de l'orientation des lames est piloté pour obtenir le mouvement tourbillonnaire souhaité en entrée du compresseur en fonction de conditions de fonctionnement du moteur. Cette solution, qui implique de prévoir des moyens spécifiques et dédiés à la génération du mouvement tourbillonnaire hélicoïdal des gaz d'admission à l'entrée du compresseur, est complexe à mettre en œuvre et entraîne un surcoût non négligeable.

Le document EP 1 676 995 A1 décrit un procédé et un dispositif selon les préambules des revendications indépendantes 1 et 9. Le document JP 2010 090806 A décrit un papillon de vannage disposé dans un conduit d'admission en amont de l'entrée du compresseur et en aval de la sortie d'un circuit de recirculation, le papillon étant contrôlé en fonction de la condensation résultante de la recirculation ou en fonction du pompage sur le compresseur.

L'invention a pour but de pallier les inconvénients des dispositifs existants en proposant un procédé de commande d'un moteur suralimenté par turbocompresseur, qui permet de repousser le phénomène de pompage du compresseur à bas régime par la prévision de moyens commandables de génération d'un mouvement tourbillonnaire hélicoïdal à l'entrée du compresseur, sans entraîner de surcoût pour la réalisation de ces derniers.

Ce but est atteint grâce à un procédé de commande d'un moteur à combustion interne suralimenté, ledit moteur comprenant des cylindres de combustion, un circuit d'admission débouchant dans un collecteur d'admission relié aux cylindres et comprenant un compresseur, et un circuit d'échappement débouchant en sortie d'un collecteur d'échappement relié aux cylindres et comprenant une turbine, couplée en rotation au compresseur, et un ou plusieurs système de post-traitement des gaz brûlés, ledit moteur étant équipé d'au moins un circuit de recirculation des gaz brûlés, ledit au moins un circuit de recirculation, prenant naissance en sortie du ou des systèmes de post-traitement et débouchant dans le circuit d'admission en amont du compresseur, comportant une vanne de recirculation pour contrôler le débit des gaz brûlés recirculés dans ledit circuit de recirculation, tandis qu'un papillon de vannage est disposé dans un conduit d'admission en amont de l'entrée du compresseur et en aval de la sortie dudit circuit de recirculation, le procédé étant du type dans lequel, dans des conditions de fonctionnement du moteur nécessitant une recirculation des gaz brûlés, lorsqu'on détermine qu'un indicateur de la charge du moteur est inférieur à une valeur de seuil, on agit sur ledit papillon de vannage selon un premier mode de pilotage, de façon à augmenter le débit des gaz brûlés recirculés admis dans le moteur, ledit procédé étant caractérisé en ce que, dans des conditions de fonctionnement du moteur ne nécessitant que peu ou pas de recirculation des gaz brûlés, lorsqu'on détermine qu'un indicateur de la charge du moteur est supérieur à ladite valeur de seuil, on agit sur ledit papillon de vannage selon un second mode de pilotage, pour générer un mouvement tourbillonnaire hélicoïdal des gaz admis à l'entrée dudit compresseur apte à améliorer la stabilité du fonctionnement dudit compresseur.

Avantageusement, ledit second mode de pilotage dudit papillon de vannage comprend les étapes suivantes :

- on mémorise une table de couples de valeurs respectivement de débit de gaz au travers du compresseur et de taux de compression du compresseur, l'ensemble des couples de valeurs mémorisés correspondant aux points de fonctionnement du compresseur définissant une limite de pompage du compresseur,

- on détermine, au moyen de capteurs, des valeurs courantes de débit au travers du compresseur et de taux de compression dudit compresseur,
- on détecte un risque de pompage dudit compresseur en fonction des valeurs courantes de débit et de taux de compression, corrélées à ladite table de couples de valeurs et, en cas de détection dudit risque de pompage,
- on contrôle une position d'ouverture dudit papillon de vannage de telle manière à s'éloigner de ladite limite de pompage.

De préférence, en cas de détection dudit risque de pompage, ladite position d'ouverture dudit papillon de vannage est contrôlée au moyen d'une cartographie préétablie fournissant un angle d'ouverture dudit papillon de vannage en fonction de valeurs de couples de débit au travers du compresser et de taux de compression du compresseur.

Avantageusement, ledit papillon de vannage est maintenu dans une position complètement ouverte en cas de non détection dudit risque de pompage.

Selon un mode de réalisation, dans ledit second mode de pilotage dudit papillon de vannage, on commande ladite vanne de recirculation en position complètement fermée.

Selon un autre mode de réalisation, dans ledit second mode de pilotage dudit papillon de vannage, on commande ladite vanne de recirculation en position partiellement ouverte.

Avantageusement, dans ledit premier mode de pilotage dudit papillon de vannage, on fournit une valeur cible de taux de gaz brûlés recirculés dans le circuit d'admission et on commande ledit papillon de vannage dans une position d'ouverture pour augmenter ledit débit de gaz brûlés recirculés jusqu'à atteindre ladite valeur cible.

De préférence, dans ledit premier mode de pilotage dudit papillon de vannage, on commande ladite vanne de recirculation en position complètement ouverte.

L'invention concerne également un dispositif de commande d'un moteur à combustion interne suralimenté, ledit moteur comprenant des cylindres de combustion, un circuit d'admission débouchant dans un collecteur d'admission relié aux cylindres et comprenant un compresseur, et un circuit d'échappement débouchant en sortie d'un collecteur d'échappement relié aux cylindres et comprenant une turbine, couplée en rotation au compresseur, et un ou plusieurs système de post-traitement des gaz brûlés, ledit moteur étant équipé d'au moins un circuit de recirculation des gaz brûlés, ledit au moins un circuit de recirculation, prenant naissance en sortie du ou des systèmes de post-traitement et débouchant dans le circuit d'admission en amont du compresseur, comportant une vanne de recirculation pour contrôler le débit des gaz brûlés recirculés dans ledit circuit de recirculation, tandis qu'un papillon de vannage est disposé dans un conduit d'admission en amont de l'entrée du compresseur et en aval de la sortie dudit circuit de recirculation, ledit dispositif comprenant un module de commande adapté à commander ledit papillon de vannage selon un premier mode de pilotage dans des conditions de fonctionnement du moteur nécessitant une recirculation des gaz brûlés, lorsqu'un indicateur de la charge du moteur est inférieur à une valeur de seuil, de façon à augmenter le débit des gaz brûlés recirculés admis dans le moteur, ledit dispositif étant caractérisé en ce que, dans des conditions de fonctionnement du moteur ne nécessitant que peu ou pas de recirculation des gaz brûlés, lorsqu'un indicateur de la charge du moteur est supérieur à ladite valeur de seuil, ledit module de commande est adapté à commander ledit papillon de vannage selon un second mode de pilotage, pour générer un mouvement tourbillonnaire hélicoïdal des gaz admis à l'entrée dudit compresseur propre à améliorer la stabilité du fonctionnement dudit compresseur.

Avantageusement, le dispositif comprend une mémoire pour mémoriser une table de couples de valeurs ($Q_{pompage}$, $(P2/P1)_{pompage}$) respectivement de débit de gaz au travers du compresseur et de taux de compression du compresseur, l'ensemble des couples de valeurs mémorisés correspondant aux points de fonctionnement du compresseur définissant une limite de pompage du compresseur, et des capteurs permettant de déterminer des valeurs courantes de débit au travers du compresseur et de taux de compression, ledit module de commande coopérant avec ladite mémoire et lesdits capteurs et étant adapté pour détecter un risque de pompage du compresseur en fonction des valeurs courantes de débit au travers du compresseur et de taux de compression corrélées à la table de couples de valeurs et, en cas de détection, pour commander une position d'ouverture dudit papillon de vannage de manière à s'éloigner de ladite limite de pompage.

D'autres particularités et avantages de l'invention ressortiront à la lecture de la description faite ci-après, donnée à titre indicatif mais non limitatif, en référence aux dessins annexés sur lesquels :

- la figure 1 illustre de façon schématique un exemple d'architecture de moteur, sur laquelle repose la stratégie de commande de l'invention ;
- la figure 2 est un organigramme décrivant la stratégie de commande selon l'invention ;
- la figure 3 est un schéma illustrant la zone de fonctionnement acceptable du compresseur par rapport à la limite de pompage mémorisée correspondant aux points de fonctionnement dans le champ compresseur représentant la fin de la zone de fonctionnement acceptable.

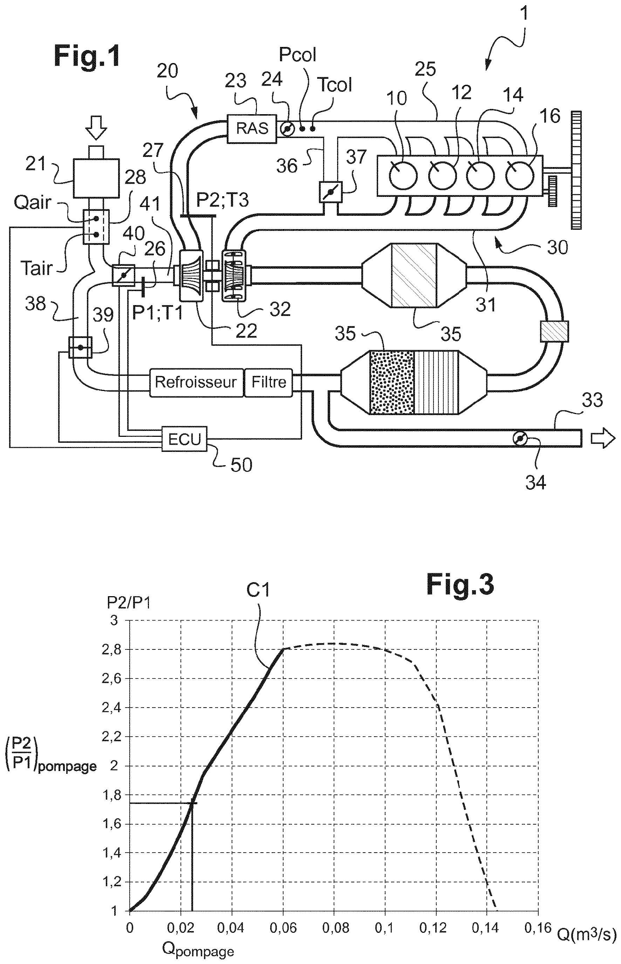

La figure 1 illustre un moteur à combustion interne 1 suralimenté de type à quatre cylindres de combustion 10, 12, 14, 16 en lignes dans l'exemple illustré.

En amont des cylindres, le moteur à combustion interne 1 comporte un circuit d'admission 20 qui prélève l'air frais dans l'atmosphère et qui débouche dans un répartiteur d'air 25, ou collecteur d'admission 25, agencé pour répartir l'air vers chacun des quatre cylindres du bloc-moteur. Ce circuit d'admission 20 comporte, dans le sens d'écoulement de l'air, un filtre à air 21 qui filtre l'air frais prélevé dans l'atmosphère, un compresseur 22, qui comprime l'air frais filtré par le filtre à air 21, un refroidisseur d'air 23 qui refroidit cet air frais comprimé, et une volet d'admission 24 qui permet de réguler le débit d'air frais débouchant dans le collecteur d'admission 25. Le circuit d'admission 20 dispose d'un débitmètre 28 en aval du filtre à air 21 de façon à mesurer le débit d'air Qair en entrée du compresseur 22.

En sortie des cylindres, le moteur à combustion interne 1 comporte un circuit d'échappement 30 qui s'étend depuis un collecteur d'échappement 31 dans lequel débouchent les gaz qui ont été préalablement brûlés dans les cylindres, jusqu'à une conduite de sortie d'échappement 33 munie d'un volet d'échappement 34 pour évacuer les gaz brûlés dans l'atmosphère. Le circuit d'échappement comporte par ailleurs, dans le sens d'écoulement des gaz, une turbine 32, et un ou plusieurs systèmes 35 de post-traitement des gaz brûlés.

La turbine 32 est entraînée en rotation par le flux de gaz brûlés sortant du collecteur d'échappement 31, et elle permet d'entraîner le compresseur 22 en rotation, grâce à des moyens de couplage mécanique tels qu'un arbre de transmission.

Ici, le moteur à combustion interne 1 comporte également un circuit 36 de recirculation des gaz brûlés à haute pression, depuis le circuit d'échappement 30 vers le circuit d'admission 20. Ce circuit de recirculation est communément appelé circuit EGR-HP, conformément à l'acronyme anglo-saxon de « Exhaust Gaz Recirculation - High Pressure ». Ce circuit prend naissance dans le circuit d'échappement 30, entre le collecteur d'échappement 31 et la turbine 32, et débouche dans le circuit d'admission 20, entre la vanne d'admission 24 et le répartiteur d'air 25.

Ce circuit EGR-HP 36 permet de prélever une partie des gaz brûlés circulant dans le circuit d'échappement 30, appelés gaz de recirculation ou gaz EGR, pour la réinjecter dans les cylindres afin de réduire les émissions polluantes du moteur, et en particulier les émissions d'oxydes d'azote, de suie et de particules d'hydrocarbure.

Ce circuit EGR-HP 36 comporte une vanne EGR-HP 37 pour réguler le débit de gaz d'échappement recirculés, dits gaz EGR, débouchant dans le répartiteur d'air 25.

En complément ou en variante, ce circuit EGR-HP est complété ou remplacé par un circuit 38 de recirculation des gaz brûlés à basse pression, communément appelé circuit EGR-LP conformément à l'acronyme anglo-saxon de « Exhaust Gaz Recirculation - Low Pressure ». Ce circuit EGR-LP 38 prend naissance dans le circuit d'échappement, en sortie du ou des systèmes 35 de post-traitement des gaz brûlés, et débouche dans le circuit d'admission 20, entre le filtre à air 31 et le compresseur 22. Ce circuit EGR-LP 38 comporte une vanne EGR-LP 39 pour réguler le débit de gaz EGR débouchant dans le circuit d'admission 2, où ils sont mélangés à l'air frais. Les gaz d'admission constitués d'air frais et de gaz EGR recyclés sont alors comprimés au moyen du compresseur 22, puis introduits dans le collecteur d'admission 25. Les gaz recyclés en sortie du ou des systèmes de post-traitement 35, qui ne sont pas re-circulés via le circuit EGR-LP 35 pour être injectés dans le circuit d'admission en amont du compresseur 22, sont évacués dans la conduite de sortie d'échappement 33 dans laquelle se trouve le volet d'échappement 34.

Par ailleurs, un papillon de vannage 40 est prévu sur un conduit d'admission 41 en amont de l'entrée du compresseur 22. Plus précisément, ce papillon de vannage 40 est situé en aval de l'arrivée des gaz EGR, soit en aval de la sortie du circuit EGR-LP 38 dans le circuit d'admission 20. Il permet de contrôler le débit des gaz d'admission à l'entrée du compresseur 22. Il est classiquement utilisé exclusivement pour augmenter le débit des gaz EGR provenant du circuit EGR-LP 38 entrant dans le moteur, de manière à réduire les oxydes d'azote ($NO_x$). Le vannage de l'admission via ce papillon de vannage 40 se traduit en effet par une dépression dans le conduit d'admission permettant d'augmenter le débit de gaz EGR et le réglage de ce vannage permet d'introduire des taux d'EGR plus importants sur la zone de dépollution du moteur.

Le papillon de vannage 40 est commandé par une unité de contrôle moteur 50 embarquée sur le véhicule. L'unité de contrôle du moteur 50, qui constitue un module de commande du papillon, est également reliée à des capteurs 26, 27 de mesure de la température T1, T2 et de la pression P1, P2 respectivement en amont et en aval du compresseur 22, ainsi qu'au débitmètre 28 du moteur en aval du filtre à air 21, fournissant une valeur du débit d'air Qair à l'admission du moteur, de façon à recevoir les valeurs de mesure fournies par ces capteurs.

L'unité de contrôle du moteur 50 va mettre en œuvre la stratégie de commande du papillon de vannage 40. Cette stratégie est conçue pour permettre de commander le papillon de vannage 40 selon deux modes de pilotage, respectivement selon un premier mode de pilotage, correspondant à l'utilisation classique du papillon de vannage 40, dans lequel ce dernier est utilisé essentiellement en charge partielle du moteur où de forts taux de gaz EGR sont requis, pour générer une dépression à l'admission permettant d'augmenter le débit de gaz EGR dans le moteur, tandis que la vanne de recirculation EGR-LP 39 est complètement ouverte, et selon un second mode de pilotage, conformément à l'invention, dans lequel le papillon de vannage 40 est utilisé à proximité d'une limite de pompage du compresseur pour générer un mouvement tourbillonnaire hélicoïdal des gaz admis à l'entrée du compresseur 22, de manière à repousser le pompage du compresseur 22. En effet, dans ce second mode de pilotage, en orientant correctement le papillon de vannage 40 par rapport à l'axe du conduit d'admission dans lequel il est disposé, le papillon de vannage 40 joue le rôle de déflecteur susceptible de générer une pré-rotation du fluide à l'entrée du compresseur 22. Cette pré-rotation modifie le triangle des vitesses, ce qui permet de renforcer la composante axiale dans la roue du compresseur et ainsi de s'opposer aux décollements aérodynamiques de l'écoulement à l'intérieur de la roue du compresseur. Typiquement, le papillon de vannage 40 est disposé à une distance comprise entre 2D et 10D de l'entrée du compresseur, où D désigne le diamètre du conduit d'admission où est disposé le papillon de vannage. Le phénomène de pompage est ainsi repoussé, ce qui permet d'améliorer les performances du moteur, qui sont sinon limitées par le pompage du compresseur. Dans ce second mode de pilotage du papillon de vannage 40, la vanne de recirculation EGR-LP 39 est alors complètement fermée (pas de recirculation des gaz EGR à l'admission) ou bien peut être légèrement ouverte (faibles taux de gaz EGR recirculés à l'admission) en fonction des besoins de dépollution du moteur.

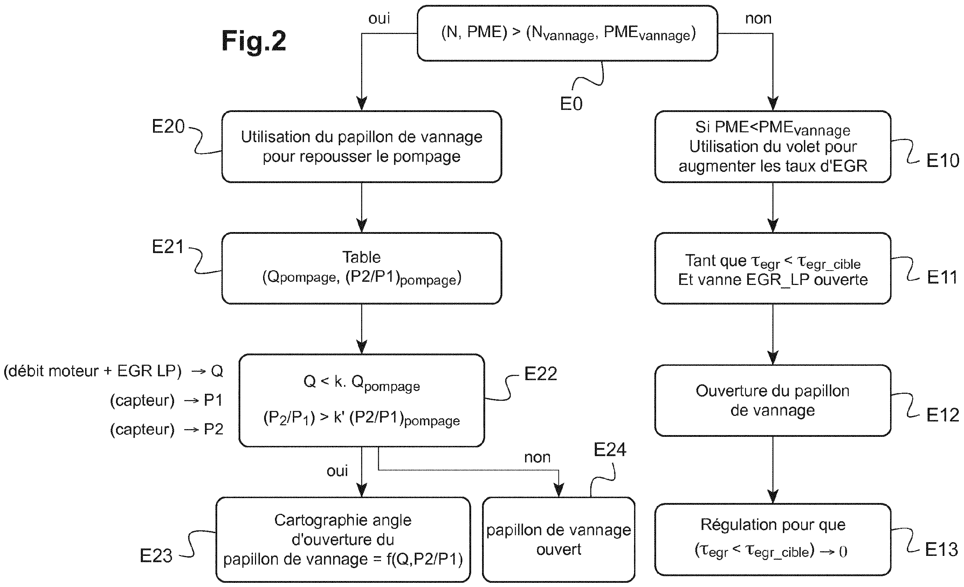

La stratégie de commande va maintenant être décrite plus en détail en référence à la figure 2. Une première étape E0 consiste à déterminer si les conditions de fonctionnement du moteur requièrent une utilisation du papillon de vannage selon le premier ou le second mode de pilotage tels que décrits ci-dessus, soit une utilisation du papillon de vannage pour augmenter le taux d'EGR à l'admission ou une utilisation du papillon de vannage pour repousser le pompage du compresseur.

Les conditions de fonctionnement peuvent être essentiellement ramenées à la vitesse de rotation de l'arbre moteur (régime N du moteur) et à un indicateur de la charge du moteur, fonction du couple appliqué sur celui-ci, l'ensemble de ces deux paramètres définissant un point de fonctionnement du moteur. L'indicateur de la charge du moteur sur lequel est basée la stratégie de commande peut par exemple être défini par la pression moyenne effective (PME) du moteur.

Dans la mesure où il est nécessaire d'utiliser des forts taux d'EGR à faible charge moteur, il est possible de définir une valeur de seuil correspondant à une PME limite, nommée $PME_{vannage}$, au-dessus de laquelle le papillon de vannage ne sera plus utilisé pour vanner à l'admission, c'est-à-dire pour forcer l'introduction de gaz EGR au travers du circuit EGR-LP au niveau du conduit d'admission à l'entrée du compresseur, soit en sortie du circuit EGR-LP.

Ainsi, si on détermine que la PME du moteur est inférieure à cette valeur de seuil $PME_{vannage}$, on bascule dans le premier mode de pilotage E10, dans lequel le papillon de vannage 40 est utilisé pour augmenter le taux de gaz EGR $\tau_{egr}$ à l'admission. Dans ce cas, la vanne 39 de recirculation du circuit EGR-LP 38 étant commandée à l'état ouvert, on établit une valeur cible de taux d'EGR $\tau_{egr\_cible}$ et tant qu'on vérifie dans une étape E11 les conditions suivantes :

$$-\ \tau_{egr} < \tau_{egr\_cible}$$

et

- vanne de recirculation du circuit EGR-LP à l'état ouvert,

on commande dans une étape E12 l'ouverture du papillon de vannage pour augmenter le taux d'EGR jusqu'à ce que la valeur cible du taux d'EGR soit atteinte. On met en œuvre, dans une étape E13, une régulation du taux d'EGR $\tau_{egr}$ par la commande de l'ouverture du papillon de vannage 40, qui est maintenue tant que le taux d'EGR n'a pas atteint la valeur cible $\tau_{egr\_cible}$ du taux d'EGR. Pour ce faire, on définit une fonction qui détermine la nouvelle valeur de commande d'ouverture en fonction de l'écart entre le taux d'EGR et la valeur cible du taux d'EGR. Cette fonction utilise par exemple une régulation de type PID (Proportionnel, Intégral, Différentiel), visant à assurer une régulation optimale.

En revanche, si on détermine à l'étape E0 que la charge PME du moteur est supérieure à la valeur de seuil $PME_{vannage}$, on bascule, dans ce cas, dans le second mode de pilotage E20, où le papillon de vannage 40 est cette fois utilisé pour repousser la limite de pompage du compresseur 22.

On mémorise au préalable, dans une étape E21, une table de couples de valeurs ($Q_{pompage}$, $(P2/P1)_{pompage}$), respectivement de débit de fluide circulant au travers du compresseur 22 et de taux de compression du compresseur 22, l'ensemble des couples de valeurs mémorisés correspondant aux points de fonctionnement du compresseur 22 définissant sa limite de pompage. Cette limite de pompage correspond aux points de la courbe C1 représentée à la figure 3 et correspond à la fin de la zone de fonctionnement stable du compresseur par rapport au champ compresseur qui représente les valeurs acceptables de taux de compression P2/P1 et de débit Q au travers du compresseur (en $m^3/s$) pour le fonctionnement du compresseur. Les points de la courbe C1 correspondent donc à l'ensemble des points de fonctionnement du compresseur ($Q_{pompage}$, $(P2/P1)_{pompage}$) mémorisés dans la table, qui délimitent la zone de fonctionnement acceptable dans le champ compresseur. On cherche donc à éviter que le point de fonctionnement du compresseur soit décalé dans la zone de la limite de pompage C1 dans le champ compresseur ou dépasse même cette zone, autrement dit que le point de fonctionnement soit situé trop à gauche dans le champ compresseur illustré à la figure 3.

Les conditions de fonctionnement du compresseur 22 sont mesurées dans une étape E22 à l'aide des capteurs 26 et 27 de mesure de la pression et de la température en amont et en aval du compresseur et du débitmètre 28 du moteur. A chaque instant, le débit Q au travers du compresseur 22 est calculé à partir du débit Qair mesuré au niveau du débitmètre 28 du moteur et du débit de gaz EGR provenant du circuit EGR-LP 38. Les pressions P1 et P2 mesurées respectivement en amont et en aval du compresseur 22 permettent de calculer le rapport de compression P2/P1.

La valeur du débit Q au travers du compresseur 22 pourra également être estimée à partir des pressions P1, P2 et températures T1, T2 mesurées en amont et en aval du compresseur 22, ce qui permettra dans ce cas de se passer du débitmètre 28.

A chaque instant, le couple de valeurs acquises (Q, P2/P1) à partir des valeurs mesurées par les capteurs, est comparé à la table mémorisée stockant l'ensemble des points de fonctionnement du compresseur ($Q_{pompage}$, $(P2/P1)_{pompage}$), qui définissent la limite de pompage du compresseur, afin de détecter un risque de pompage du compresseur. Le risque de pompage est détecté lorsque le point de fonctionnement du compresseur correspondant au couple de valeurs acquises (Q, P2/P1) est situé trop à gauche dans le champ compresseur. Plus précisément, le couple de valeurs acquises (Q, P2/P1) de débit au travers du compresseur et de taux de compression du compresseur est corrélé à la table de couples de valeurs ($Q_{pompage}$, $(P2/P1)_{pompage}$) définissant la limite de pompage C1 du compresseur, de façon à détecter l'une ou l'autre des conditions suivantes :

$$Q < k.Q_{pompage}$$

$$(P2/P1) > k'(P2/P1)_{pompage}$$

Ainsi, la corrélation de la valeur acquise du débit au travers du compresseur à la table de couples de valeurs ($Q_{pompage}$, $(P2/P1)_{pompage}$) définissant la limite de pompage C1 du compresseur met en œuvre la comparaison de la valeur acquise à une valeur de consigne de débit $k.Q_{pompage}$ qui correspond à la valeur $Q_{pompage}$ mémorisée dans la table pour le taux de compression correspondant, affectée d'un coefficient k permettant d'ajuster une marge de sécurité, ou marge au pompage, par rapport à la limite de pompage C1. Le coefficient k est choisi de préférence supérieur à 1 et inférieur ou égal à 1,1 et plus préférentiellement encore dans une plage de valeurs comprises entre 1,05 et 1,1, de façon à ajuster la valeur du coefficient k à la marge au pompage que l'on souhaite obtenir.

De la même façon, la corrélation de la valeur acquise du taux de compression à la table ($Q_{pompage}$, $(P2/P1)_{pompage}$) met en œuvre la comparaison de la valeur acquise à une valeur de consigne de taux de compression $k'(P2/P1)_{pompage}$, qui correspond à la valeur $(P2/P1)_{pompage}$ mémorisée dans la table pour le débit correspondant, affectée d'un coefficient k' permettant d'ajuster une marge de sécurité par rapport à la limite de pompage C1. Le coefficient k' est choisi de préférence supérieur à 0,9 et inférieur à 1, dans une plage de valeurs comprises par exemple entre 0,92 et 0,98, de façon à ajuster la valeur du coefficient k' à la marge au pompage que l'on souhaite obtenir.

De ce fait, un point de fonctionnement critique du compresseur peut être détecté avant que la limite de pompage du compresseur soit atteinte, c'est-à-dire qu'avant que le point de fonctionnement du compresseur soit décalé dans la zone de la limite de pompage du compresseur ou dépasse même cette zone.

Lorsqu'un risque de pompage est détecté à l'étape E22 suite à la vérification de l'une ou l'autre des deux inégalités ci-dessus, considérant le point de fonctionnement courant du compresseur dans le champ compresseur par rapport à la limite de pompage mémorisée, on passe dans une étape E23 dans laquelle on contrôle l'ouverture du papillon de vannage 40 de telle sorte à éloigner le point de fonctionnement du compresseur de la limite de pompage.

Pour ce faire, on commande l'ouverture du papillon de vannage dans une position donnée par une cartographie préétablie fournissant une valeur d'angle d'ouverture du papillon de vannage en fonction de valeurs de couples de débit au travers du compresseur et de taux de compression du compresseur. Ladite position d'ouverture du papillon est définie de manière à améliorer la composante débitante du triangle de vitesses au travers du compresseur de manière à ce que le débit Q au travers du compresseur redevienne supérieur à $k.Q_{pompage}$.

Par contre, lorsqu'aucun risque de pompage n'est détecté à l'étape E22, on maintient le papillon de vannage 40 en position complètement ouverte, à l'étape E24.

## Revendications

1. Procédé de commande d'un moteur à combustion interne suralimenté, ledit moteur comprenant des cylindres de combustion (10-16), un circuit d'admission (20) débouchant dans un collecteur d'admission (25) relié aux cylindres et comprenant un compresseur (22), et un circuit d'échappement (30) débouchant en sortie d'un collecteur d'échappement (31) relié aux cylindres et comprenant une turbine (32), couplée en rotation au compresseur, et un ou plusieurs système de post-traitement (35) des gaz brûlés, ledit moteur étant équipé d'au moins un circuit de recirculation des gaz brûlés (38), ledit au moins un circuit de recirculation, prenant naissance en sortie du ou des systèmes de post-traitement (35) et débouchant dans le circuit d'admission en amont du compresseur (22), comportant une vanne de recirculation (39) pour contrôler le débit des gaz brûlés recirculés dans ledit circuit de recirculation (38), tandis qu'un papillon de vannage (40) est disposé dans un conduit d'admission (41), le procédé étant du type dans lequel, dans des conditions de fonctionnement du moteur nécessitant une recirculation des gaz brûlés, lorsqu'on détermine qu'un indicateur de la charge du moteur est inférieur à une valeur de seuil ($PME_{pompage}$), on agit sur ledit papillon de vannage (40) selon un premier mode de pilotage (E10), de façon à augmenter le débit des gaz brûlés recirculés admis dans le moteur, ledit procédé étant **caractérisé en ce que**, dans des conditions de fonctionnement du moteur ne nécessitant que peu ou pas de recirculation des gaz brûlés, lorsqu'on détermine qu'un indicateur de la charge du moteur est supérieur à ladite valeur de seuil ($PME_{pompage}$), on agit sur ledit papillon de vannage (40) selon un second mode de pilotage (E20), pour générer un mouvement tourbillonnaire hélicoïdal des gaz admis à l'entrée dudit compresseur (22) apte à améliorer la stabilité du fonctionnement dudit compresseur (22), le procédé étant **caractérisé en ce que** le papillon de vannage (40) est disposé en amont de l'entrée du compresseur (22) et en aval de la sortie dudit circuit de recirculation (38).

2. Procédé selon la revendication 1, **caractérisé en ce que** ledit second mode de pilotage (E20) dudit papillon de vannage (40) comprend les étapes suivantes :

   - on mémorise (E21) une table de couples de valeurs ($Q_{pompage}$. $(P2/P1)_{pompage}$) respectivement de débit de gaz au travers du compresseur et de taux de compression du compresseur, l'ensemble des couples de valeurs mémorisés correspondant aux points de fonctionnement du compresseur définissant une limite de pompage (C1) du compresseur,
   - on détermine (E22), au moyen de capteurs (26, 27, 28), des valeurs courantes de débit au travers du compresseur et de taux de compression dudit compresseur,
   - on détecte (E22) un risque de pompage dudit compresseur en fonction des valeurs courantes de débit et de taux de compression, corrélées à ladite table de couples de valeurs et, en cas de détection dudit risque de pompage,
   - on contrôle (E23) une position d'ouverture dudit papillon de vannage (40) de telle manière à s'éloigner de ladite limite de pompage.

3. Procédé selon la revendication 2, **caractérisé en ce que**, en cas de détection dudit risque de pompage, ladite position d'ouverture dudit papillon de vannage (40) est contrôlée au moyen d'une cartographie préétablie fournissant un angle d'ouverture dudit papillon de vannage en fonction de valeurs de couples de débit au travers du compresser et de taux de compression du compresseur.

4. Procédé selon la revendication 2 ou 3, **caractérisé en ce que** ledit papillon de vannage (40) est maintenu dans une position complètement ouverte en cas de non détection dudit risque de pompage.

5. Procédé selon l'une quelconque des revendications 1 à 4, **caractérisé en ce que**, dans ledit second mode de pilotage (E20) dudit papillon de vannage (40), on commande ladite vanne de recirculation (39) en position complètement fermée.

6. Procédé selon l'une quelconque des revendications 1 à 4, **caractérisé en ce que**, dans ledit second mode de pilotage (E20) dudit papillon de vannage (40), on commande ladite vanne de recirculation (39) en position partiellement ouverte.

7. Procédé selon l'une quelconque des revendications précédentes, **caractérisé en ce que**, dans ledit premier mode de pilotage (E10) dudit papillon de vannage (40), on fournit (E11) une valeur cible de taux de gaz brûlés recirculés dans le circuit d'admission et on commande (E12) ledit papillon de vannage (40) dans une position d'ouverture pour augmenter ledit débit de gaz brûlés recirculés jusqu'à atteindre ladite valeur cible.

8. Procédé selon la revendication 7, **caractérisé en ce que**, dans ledit premier mode de pilotage (E10) dudit papillon de vannage (40), on commande ladite vanne de recirculation (39) en position complètement ouverte.

9. Dispositif de commande d'un moteur à combustion interne suralimenté, ledit moteur comprenant des cylindres de combustion (10-16), un circuit d'admission (20) débouchant dans un collecteur d'admission (25) relié aux cylindres et comprenant un compresseur (22), et un circuit d'échappement (30) débouchant en sortie d'un collecteur d'échappement (31) relié aux cylindres et comprenant une turbine (32), couplée en rotation au compresseur, et un ou plusieurs système de post-traitement (35) des gaz brûlés, ledit moteur étant équipé d'au moins un circuit de recirculation des gaz brûlés (38), ledit au moins un circuit de recirculation, prenant naissance en sortie du ou des systèmes de post-traitement (35) et débouchant dans le circuit d'admission en amont du compresseur (22), comportant une vanne de recirculation (39) pour contrôler le débit des gaz brûlés recirculés dans ledit circuit de recirculation (38), tandis qu'un papillon de vannage (40) est disposé dans un conduit d'admission (41), ledit dispositif comprenant un module de commande (50) adapté à commander ledit papillon de vannage (40) selon un premier mode de pilotage (E10) dans des conditions de fonctionnement du moteur nécessitant une recirculation des gaz brûlés, lorsqu'un indicateur de la charge du moteur est inférieur à une valeur de seuil (PME$_{pompage}$), de façon à augmenter le débit des gaz brûlés recirculés admis dans le moteur, ledit dispositif étant **caractérisé en ce que**, dans des conditions de fonctionnement du moteur ne nécessitant que peu ou pas de recirculation des gaz brûlés, lorsqu'un indicateur de la charge du moteur est supérieur à ladite valeur de seuil (PME$_{pompage}$), ledit module de commande est adapté à commander ledit papillon de vannage (40) selon un second mode de pilotage (E20), pour générer un mouvement tourbillonnaire hélicoïdal des gaz admis à l'entrée dudit compresseur (22) propre à améliorer la stabilité du fonctionnement dudit compresseur (22), le dispositif étant **caractérisé en ce que** le papillon de vannage (40) est disposé en amont de l'entrée du compresseur (22) et en aval de la sortie dudit circuit de recirculation (38).

10. Dispositif selon la revendication 9, **caractérisé en ce qu'**il comprend une mémoire pour mémoriser une table de couples de valeurs (Q$_{pompage}$, (P2/P1)$_{pompage}$) respectivement de débit de gaz au travers du compresseur et de taux de compression du compresseur, l'ensemble des couples de valeurs mémorisés correspondant aux points de fonctionnement du compresseur définissant une limite de pompage (C1) du compresseur, et des capteurs (26, 27, 28) permettant de déterminer des valeurs courantes de débit au travers compresseur (22) et de taux de compression, ledit module de commande (50) coopérant avec ladite mémoire et lesdits capteurs et étant adapté pour détecter un risque de pompage du compresseur (22) en fonction des valeurs courantes de débit au travers du compresseur et de taux de compression corrélées à la table de couples de valeurs (Q$_{pompage}$, (P2/P1)$_{pompage}$) et, en cas de détection, pour commander une position d'ouverture dudit papillon de vannage (40) de manière à s'éloigner de ladite limite de pompage.

**Patentansprüche**

1. Verfahren zur Steuerung eines aufgeladenen Verbrennungsmotors, wobei der Motor Verbrennungszylinder (10-16), einen Ansaugkreislauf (20), der in einen mit den Zylindern verbundenen Ansaugkrümmer (25) mündet und einen Verdichter (22) enthält, und einen Abgaskreislauf (30), der am Ausgang eines mit den Zylindern verbundenen Auspuffkrümmers (31) mündet und eine Turbine (32) enthält, die in Drehung mit dem Verdichter verbunden ist, und ein oder mehrere Nachbehandlungssysteme (35) der Abgase enthält, wobei der Motor mit mindestens einem Abgasrückführungskreislauf (38) ausgestattet ist, wobei der mindestens eine Rückführungskreislauf, der am Ausgang des oder der Nachbehandlungssysteme (35) beginnt und in den Ansaugkreislauf stromaufwärts vor dem Verdichter (22) mündet, ein Rückführungsventil (39) aufweist, um den Durchsatz der rückgeführten Abgase im Rückführungskreislauf (38) zu kontrollieren, während eine Ventil-Drosselklappe (40) in einem Ansaugkanal (41) angeordnet ist, wobei das Verfahren von der Art ist, bei der unter Betriebsbedingungen des Motors, die eine Abgasrückführung erfordern, wenn bestimmt wird, dass ein Anzeiger der Last des Motors niedriger ist als ein Schwellwert (PME$_{pompage}$), auf die Ventil-Drosselklappe (40) gemäß einem ersten Steuermodus (E10) eingewirkt wird, um den Durchsatz der in den Motor angesaugten rückgeführten Abgase zu erhöhen, wobei das Verfahren **dadurch gekennzeichnet ist, dass** unter Betriebsbedingungen des Motors, die keine oder nur wenig Abgasrückführung erfordern, wenn bestimmt wird, dass ein Anzeiger der Last des Motors höher ist als der Schwellwert (PME$_{pompage}$), auf die Ventil-Drosselklappe (40) gemäß einem zweiten Steuermodus (E20) eingewirkt wird, um eine schraubenförmige Wirbelbewegung der am Eingang des Verdichters (22) angesaugten Gase zu erzeugen, die die Stabilität des Betriebs des Verdichters (22) verbessern kann, wobei das Verfahren **dadurch gekennzeichnet ist, dass** die Ventil-Drosselklappe (40) stromaufwärts vor dem Eingang des Verdichters (22) und stromabwärts hinter dem Ausgang des Rückführungskreislaufs (38) angeordnet ist.

2. Verfahren nach Anspruch 1, **dadurch gekennzeichnet, dass** der zweite Steuermodus (E20) der Ventil-Drosselklappe (40) die folgenden Schritte enthält:

- eine Tabelle von Wertepaaren (Q$_{pompage}$, (P2/P1)$_{pompage}$) eines Gasdurchsatzes durch den Verdichter bzw. eines Verdichtungsverhältnisses des Verdichters wird gespeichert (E21), wobei die Einheit der gespeicherten Wertepaare den Betriebspunkten des Verdichters entspricht, die eine Pumpgrenze (C1) des Verdichters definieren,
- mittels Sensoren (26, 27, 28) werden aktuelle Werte des Durchsatzes durch den Verdichter und des Verdichtungsverhältnisses des Verdichters bestimmt (E22),
- ein Pumprisiko des Verdichters wird abhängig von den aktuellen Werten des Durchsatzes und des Verdichtungsverhältnisses erfasst (E22), die mit der Tabelle von Wertepaaren korreliert sind, und im Fall einer Erfassung des Pumprisikos

- wird eine Öffnungsstellung der Ventil-Drosselklappe (40) kontrolliert (E23), um sich von der Pumpgrenze zu entfernen.

3. Verfahren nach Anspruch 2, **dadurch gekennzeichnet, dass** im Fall einer Erfassung des Pumprisikos die Öffnungsstellung der Ventil-Drosselklappe (40) mittels einer vorab erstellten Kartographie kontrolliert wird, die einen Öffnungswinkel der Ventil-Drosselklappe abhängig von Werten von Durchsatzpaaren durch den Verdichter und des Verdichtungsverhältnisses des Verdichters liefert.

4. Verfahren nach Anspruch 2 oder 3, **dadurch gekennzeichnet, dass** im Fall einer Nichterfassung des Pumprisikos die Ventil-Drosselklappe (40) in einer vollständig offenen Stellung gehalten wird.

5. Verfahren nach einem der Ansprüche 1 bis 4, **dadurch gekennzeichnet, dass** im zweiten Steuermodus (E20) der Ventil-Drosselklappe (40) das Rückführungsventil (39) in die vollständig geschlossene Stellung gesteuert wird.

6. Verfahren nach einem der Ansprüche 1 bis 4, **dadurch gekennzeichnet, dass** im zweiten Steuermodus (E20) der Ventil-Drosselklappe (40) das Rückführungsventil (39) in die teilweise offene Stellung gesteuert wird.

7. Verfahren nach einem der vorhergehenden Ansprüche, **dadurch gekennzeichnet, dass** im ersten Steuermodus (E10) der Ventil-Drosselklappe (40) ein Zielwert des Gehalts an rückgeführten Abgasen im Ansaugkreislauf geliefert wird (E11), und die Ventil-Drosselklappe (40) in eine Öffnungsstellung gesteuert wird (E12), um den Durchsatz rückgeführter Abgase zu erhöhen, bis der Zielwert erreicht ist.

8. Verfahren nach Anspruch 7, **dadurch gekennzeichnet, dass** im ersten Steuermodus (E10) der Ventil-Drosselklappe (40) das Rückführungsventil (39) in die vollständig offene Stellung gesteuert wird.

9. Vorrichtung zur Steuerung eines aufgeladenen Verbrennungsmotors, wobei der Motor Verbrennungszylinder (10-16), einen Ansaugkreislauf (20), der in einen mit den Zylindern verbundenen Ansaugkrümmer (25) mündet und einen Verdichter (22) enthält, und einen Abgaskreislauf (30), der am Ausgang eines mit den Zylindern verbundenen Auspuffkrümmers (31) mündet und eine Turbine (32) enthält, die in Drehung mit dem Verdichter verbunden ist, und ein oder mehrere Nachbehandlungssysteme (35) der Abgase enthält, wobei der Motor mit mindestens einem Abgasrückführungskreislauf (38) ausgestattet ist, wobei der mindestens eine Rückführungskreislauf, der am Ausgang des oder der Nachbehandlungssysteme (35) beginnt und in den Ansaugkreislauf stromaufwärts vor dem Verdichter (22) mündet, ein Rückführungsventil (39) aufweist, um den Durchsatz der rückgeführten Abgase im Rückführungskreislauf (38) zu kontrollieren, während eine Ventil-Drosselklappe (40) in einem Ansaugkanal (41) angeordnet ist, wobei die Vorrichtung ein Steuermodul (50) enthält, das geeignet ist, die Ventil-Drosselklappe (40) gemäß einem ersten Steuermodus (E10) unter Betriebsbedingungen des Motors zu steuern, die eine Abgasrückführung erfordern, wenn ein Anzeiger der Last des Motors niedriger ist als ein Schwellwert ($PME_{pompage}$), um den Durchsatz der in den Motor angesaugten rückgeführten Abgase zu erhöhen, wobei die Vorrichtung **dadurch gekennzeichnet ist, dass** unter Betriebsbedingungen des Motors, die nur wenig oder keine Abgasrückführung erfordern, wenn ein Anzeiger der Last des Motors höher ist als der Schwellwert ($PME_{pompage}$), das Steuermodul geeignet ist, die Ventil-Drosselklappe (40) gemäß einem zweiten Steuermodus (E20) zu steuern, um eine schraubenförmige Wirbelbewegung der angesaugten Gase am Eingang des Verdichters (22) zu erzeugen, die die Stabilität des Betriebs des Verdichters (22) verbessern kann, wobei die Vorrichtung **dadurch gekennzeichnet ist, dass** die Ventil-Drosselklappe (40) stromaufwärts vor dem Eingang des Verdichters (22) und stromabwärts hinter dem Ausgang des Rückführungskreislaufs (38) angeordnet ist.

10. Vorrichtung nach Anspruch 9, **dadurch gekennzeichnet, dass** sie einen Speicher, um eine Tabelle von Wertepaaren ($Q_{pompager}$ $(P2/P1)_{pompage}$) eines Gasdurchsatzes durch den Verdichter bzw. eines Verdichtungsverhältnisses des Verdichters zu speichern, wobei die Einheit der gespeicherten Wertepaare den Betriebspunkten des Verdichters entspricht, die eine Pumpgrenze (C1) des Verdichters definieren, und Sensoren (26, 27, 28) enthält, die es ermöglichen, aktuelle Werte des Durchsatzes durch den Verdichter (22) und des Verdichtungsverhältnisses zu bestimmen, wobei das Steuermodul (50) mit dem Speicher und den Sensoren zusammenwirkt und geeignet ist, ein Pumprisiko des Verdichters (22) abhängig von den aktuellen Werten des Durchsatzes durch den Verdichter und des Verdichtungsverhältnisses, die mit der Tabelle von Wertepaaren ($Q_{pompage}$, $(P2/P1)_{pompage}$) korreliert sind, zu erfassen, und im Fall einer Erfassung eine Öffnungsstellung der Ventil-Drosselklappe (40) zu steuern, um sich von der Pumpgrenze zu entfernen.

**Claims**

1. Method for controlling a supercharged internal combustion engine, said engine comprising combustion cylinders (10-16), an intake circuit (20) opening into an intake manifold (25) connected to the cylinders and comprising a compressor (22), and an exhaust circuit (30) opening onto the outlet of an exhaust manifold (31) connected to the cylinders and comprising a turbine (32), rotationally coupled to the compressor, and one or more post-treatment systems (35) for the post-treatment of the exhaust gases, said engine being equipped with at least one exhaust gas recirculation circuit (38), said at least one recirculation circuit starting at the outlet from the post-treatment system or systems (35) and opening into the intake circuit upstream of the compressor (22), comprising a recirculation valve (39) for controlling the flow rate of the recirculated exhaust gases in said recirculation circuit (38), while a throttling butterfly valve (40) is positioned in an intake pipe (41), the method being of the type wherein,

under engine operating conditions that require exhaust gas recirculation, when it is determined that an indicator of the engine load is below a threshold value ($MEP_{surge}$), said throttling butterfly valve (40) is operated according to a first control mode (E10) so as to increase the flow rate of recirculated exhaust gases admitted to the engine, said method being **characterized in that**, under engine operating conditions that require little or no exhaust gas recirculation, when it is determined that an indicator of the load on the engine is above said threshold value ($MEP_{surge}$)said throttling butterfly valve (40) is operated according to a second control mode (E20) to generate a helical swirling movement of the gases admitted to the inlet of said compressor (22) to improve the operational stability of said compressor (22), the method being **characterized in that** the throttling butterfly valve (40) is positioned upstream of the inlet to the compressor (22) and downstream of the outlet of said recirculation circuit (38) .

2. Method according to Claim 1, **characterized in that** said second control mode (E20) for controlling said throttling butterfly valve (40) comprises the following steps:

- a table of pairs of values ($Q_{surge}$, $(P2/P1)_{surge}$) respectively for the flow rate of gas through the compressor and the compression ratio of the compressor is stored in memory (E21), the set of pairs of values stored in memory corresponding to the compressor operating points that define a surge limit (C1) for the compressor,
- sensors (26, 27, 28) are used to determine (E22) current values for the flow rate through the compressor and for the compression ratio of said compressor,
- a risk of surge of said compressor is detected (E22) on the basis of the current flow rate and compression ratio values, correlated with said table of pairs of values and, if said risk of surge is detected,
- said throttling butterfly valve (40) is controlled (E23) into a position of opening that moves away from said surge limit.

3. Method according to Claim 2, **characterized in that**, if said risk of surge is detected, said position of opening of said throttling butterfly valve (40) is controlled by means of a preestablished map that provides an angle of opening of said throttling butterfly valve as a function of values for pairs of flow rate through the compressor and compressor compression ratio.

4. Method according to Claim 2 or 3, **characterized in that** said throttling butterfly valve (40) is kept in a wide open position if said risk of surge is not detected.

5. Method according to any one of Claims 1 to 4, **characterized in that**, in said second control mode (E20) for control of said throttling butterfly valve (40), said recirculation valve (39) is commanded into the fully closed position.

6. Method according to any one of Claims 1 to 4, **characterized in that**, in said second control mode (E20) for controlling said throttling butterfly valve (40), said recirculation valve (39) is commanded into a partially open position.

7. Method according to any one of the preceding claims, **characterized in that**, in said first control mode (E10) for controlling said throttling butterfly valve (40), a target value for the level of exhaust gases recirculated into the intake circuit is supplied (E11) and said throttling butterfly valve (40) is commanded (E12) into a position of opening that increases said flow rate of recirculated exhaust gases until said target value is reached.

8. Method according to Claim 7, **characterized in that**, in said first control mode (E10) for controlling said throttling butterfly valve (40), said recirculation valve (39) is commanded into the wide open position.

9. Device for controlling a supercharged internal combustion engine, said engine comprising combustion cylinders (10-16), an intake circuit (20) opening into an intake manifold (25) connected to the cylinders and comprising a compressor (22), and an exhaust circuit (30) opening onto the outlet of an exhaust manifold (31) connected to the cylinders and comprising a turbine (32), rotationally coupled to the compressor, and one or more post-treatment systems (35) for the post-treatment of the exhaust gases, said engine being equipped with at least one exhaust gas recirculation circuit (38), said at least one recirculation circuit starting at the outlet from the post-treatment system or systems (35) and opening into the intake circuit upstream of the compressor (22), comprising a recirculation valve (39) for controlling the flow rate of the recirculated exhaust gases in said recirculation circuit (38), while a throttling butterfly valve (40) is positioned in an intake pipe (41),
said device comprising a control module (50) able to command said throttling butterfly valve (40) according to a first control mode (E10) under engine operating conditions requiring recirculation of the exhaust gases, when an indicator of the load on the engine is below a threshold value ($MEP_{surge}$)so as to increase the flow rate of the recirculated exhaust gases admitted to the engine, said device being **characterized in that**, under engine operating conditions requiring little or no exhaust gas recirculation, when an indicator of the load on the engine is above said threshold value ($MEP_{surge}$), said control module is designed to command said throttling butterfly valve (40) according to a second control mode (E20) to generate a helical swirling movement of the gases admitted to the inlet of said compressor (22) to improve the operational stability of said compressor (22), the method being **characterized in that** the throttling butterfly valve (40) is positioned upstream of the inlet to the compressor (22) and downstream of the outlet of said recirculation circuit (38).

10. Device according to Claim 9, **characterized in that** it comprises a memory for storing a table of pairs of values ($Q_{surge}$, $(P2/P1)_{surge}$) respectively of the gas flow rate through the compressor and of the compression ratio of the compressor, the set of pairs of values stored in memory corresponding to the operating points of the compressor defining a compressor surge limit (C1), and sensors (26, 27, 28) allowing the current values of flow rate through the compressor (22) and compression ratio to be determined, said control module (50) collaborating with said memory and said sensors and being designed to detect a risk of surging of the compressor (22) as a function of the current values for flow rate through the compressor and for compression ratio correlated with the table of pairs of values ($Q_{surge}$, $(P2/P1)_{surge}$) and, in the event of detection, to command said throttling butterfly valve (40) into a position of opening that moves away from said surge limit.

# Fig.1

# Fig.3

# Fig.2

E0 — (N, PME) > (N$_{vannage}$, PME$_{vannage}$)

**non** →

E10 — Si PME<PME$_{vannage}$ Utilisation du volet pour augmenter les taux d'EGR →

E11 — Tant que $\tau_{egr}$ < $\tau_{egr\_cible}$ Et vanne EGR_LP ouverte →

E12 — Ouverture du papillon de vannage →

E13 — Régulation pour que ($\tau_{egr}$ < $\tau_{egr\_cible}$) → 0

**oui** →

E20 — Utilisation du papillon de vannage pour repousser le pompage →

E21 — Table (Q$_{pompage}$, (P2/P1)$_{pompage}$) →

E22 — Q < k. Q$_{pompage}$ ($P_2/P_1$) > k' (P2/P1)$_{pompage}$

(débit moteur + EGR LP) → Q
(capteur) → P1
(capteur) → P2

**non** → E24 — papillon de vannage ouvert

**oui** → E23 — Cartographie angle d'ouverture du papillon de vannage = f(Q,P2/P1)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 101240940
- EP 1676995 A1

- JP 2010090806 A